# EUROPEAN PATENT SPECIFICATION

(11) **EP 2 435 742 B1**
(45) Date of publication and mention of the grant of the patent: **08.07.2015**
(21) Application number: 10728277.4
(22) Date of filing: 26.05.2010
(51) Int. Cl.: F16L 57/02, F16L 1/12, H02G 3/04

(54) **BEND RESTRICTOR**
BIEGERESTRIKTOR
LIMITEUR DE COURBURE

(30) Priority: 26.05.2009 GB 0908909; 11.11.2009 GB 0919728
(43) Date of publication of application: 04.04.2012
(73) Proprietor: Pipeline Engineering & Supply Co. Ltd., Catterick Bridge Richmond DL10 7JQ (GB)
(72) Inventor: BRINHAM, Robin, Yorkshire DL11 7TN (GB); BARKER, Chris, Tyne and Wear NE8 4NL (GB); BROWN, Dominic, Cleveland TS17 0TA (GB)
(74) Representative: Hendry, Niall James
(86) International application number: PCT/GB2010/050875
(87) International publication number: WO 2010/136801

(56) References cited:
- WO-A1-98/35363
- DE-C- 697 927
- GB-A- 2 202 026
- US-A1- 2002 117 229

## Description

### Field of the Invention:

The present invention relates to a bend restrictor for the protection of flexible utility lines and the like.

### Background to the Invention:

Bend restrictors are used to prevent the overbending of utility lines such as flexible flowlines, umbilicals and cables, during installation and service.

Bend restrictors are fabricated as a series of interconnected sections, commonly known as vertebrae. When joined together in series, each vertebra is prevented from moving more than a small angular distance relative to the next vertebra in the chain. When expanded over the entire bend restrictor length, the small angular movements that each vertebra may undergo combine to define the locking radius of the bend restrictor.

A utility line is housed within a longitudinal bore through the bend restrictor. The bend restrictor is configured such that its locking radius is greater than or equal to the minimum bend radius of the utility line housed within the bend restrictor. In this way the series of vertebrae which form the bend restrictor "lock-out" to prevent bending of the utility line below its minimum bend radius. In this manner the bend restrictor prevents kinking, buckling or damage of the utility line housed within it.

A disadvantage associated with existing bend restrictors is that up to the "lock-out" point bend restrictors provide little resistance to motion and as such the utility line may be subject to fatigue stresses if the restrictor and vertebrae experience regular movement below the "lock-out" point. For example, such movement may occur when the bend restrictor assembly is in use on flow pipes that are located in shallow sea waters where the waves and tides are constantly acting upon it.

In addition to the fatigue stresses suffered by the utility line, the bend restrictor itself will suffer wear as the vertebrae continually rub against one another.

It is an aim of the present invention to obviate or mitigate one or more of the aforementioned disadvantages.

Flexible conduits having the features recited in the preamble of claim 1 are disclosed in GB2202026A and DE697927C.

### Summary of the Invention:

According to a first aspect of the invention, there is provided a protective housing for a utility line in accordance with claim 1.

Each body member may be formed from two longitudinal sections which are attached to one another so as to surround the utility line.

Each section may have two sets of attachment apertures adapted to receive mechanical fixtures, and wherein each of a first set of the apertures includes a locating block and each of a second set of the apertures includes a locating recess adapted to receive a corresponding locating block.

The housing may further comprise a plurality of longitudinally arranged body members, and a damping member located between each body member.

The member may be formed from two longitudinal sections which are attached to one another so as to surround the utility line.

Each section may have two sets of attachment apertures adapted to receive mechanical fixtures, and wherein each of a first set of the apertures includes a locating block and each of a second set of the apertures includes a locating recess adapted to receive a corresponding locating block.

According to a second aspect of the invention, there is provided a method of assembling a protective housing for a utility line in accordance with claim 8.

### Brief Description of the Drawings:

Preferred embodiments of the present invention will now be described by way of example only, with reference to the accompanying drawings, which are:
figure 1, which provides a perspective view of two interconnected sections of a first embodiment of a bend restrictor;
figure 2, which provides a perspective view of a plurality of interconnected sections of the bend restrictor of figure 1;
figure 3, which provides a perspective view of two interconnected sections of a second embodiment of a bend restrictor;
figure 4, which provides a view of one half of an alternative damper for use with a bend restrictor;

Each section may have two sets of attachment apertures adapted to receive mechanical fixtures, and wherein each of a first set of the apertures includes a locating block and each of a second set of the apertures includes a locating recess adapted to receive a corresponding locating block.

According to a third aspect of the invention, there is provided a protective member for a utility line housing, the member comprising a body portion having first and second cavities therein, wherein the first and second cavities communicate with respective first and second ends of the body portion for receiving the projecting portions of adjacent protective members therein.

The protective member may further comprise a resilient damping member located in one or both cavities.

The member may be formed from two longitudinal sections which are attached to one another so as to surround the utility line.

Each section may have two sets of attachment apertures adapted to receive mechanical fixtures, and wherein each of a first set of the apertures includes a locating block and each of a second set of the apertures includes a locating recess adapted to receive a corresponding locating block.

According to a fourth aspect of the invention, there is provided a method of assembling a protective housing for a utility line, comprising:
pivotably connecting a first set of longitudinally arranged body members together, whereby a longitudinally projecting portion extends from the body members at either end of the first set;
running the first set of body members onto the utility line via a bore defined through each of the members;
pivotably connecting a second set of longitudinally arranged body members together, whereby a longitudinally projecting portion extends from the body members at either end of the second set;
running the second set of body members onto the utility line via a bore defined through each of the members, whereby projecting portions from both the first and second sets lie adjacent one another on the utility line;
providing a protective member comprising a body portion having first and second cavities therein, wherein the first and second cavities communicate with respective first and second ends of the body portion; and
locating the projecting portions of the first and second sets of body members in the respective cavities of the protective member, thereby connecting the first and second sets of body members together on the utility line.

### Brief Description of the Drawings:

Preferred embodiments of the present invention will now be described by way of example only, with reference to the accompanying drawings, which are:

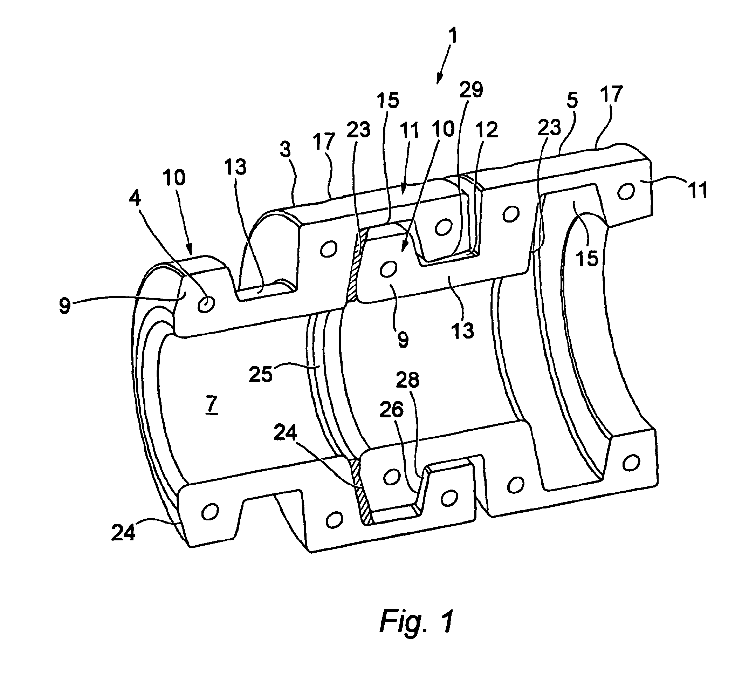

figure 1, which provides a perspective view of two interconnected sections of a first embodiment of a bend restrictor;

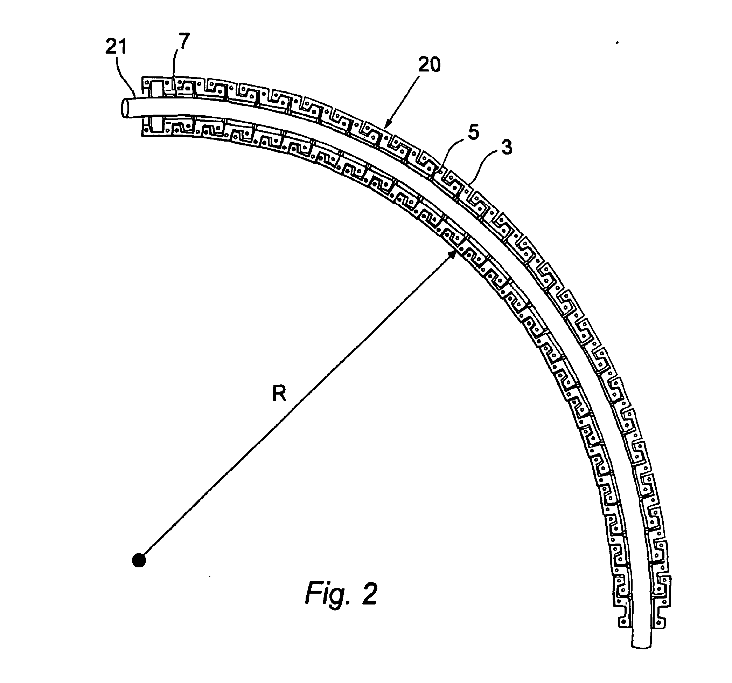

figure 2, which provides a perspective view of a plurality of interconnected sections of the bend restrictor of figure 1;

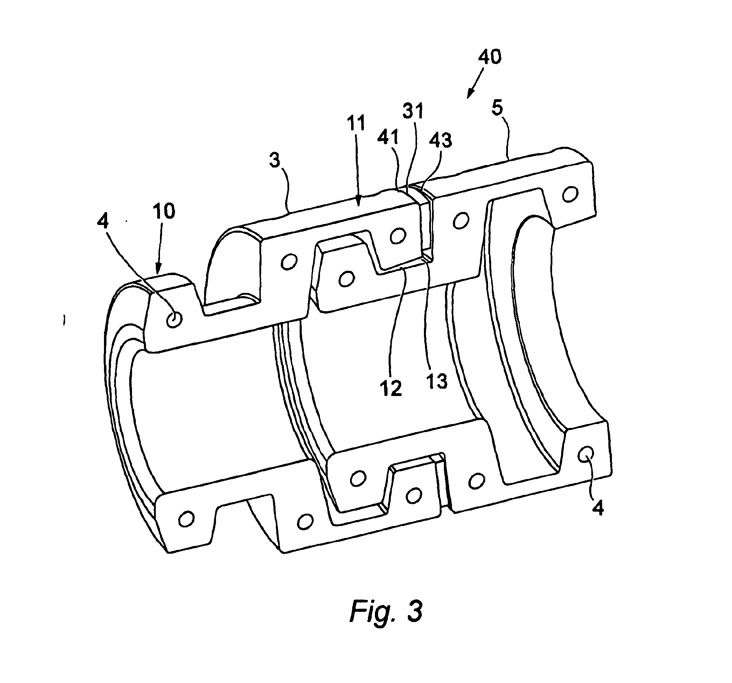

figure 3, which provides a perspective view of two interconnected sections of a bend restrictor;

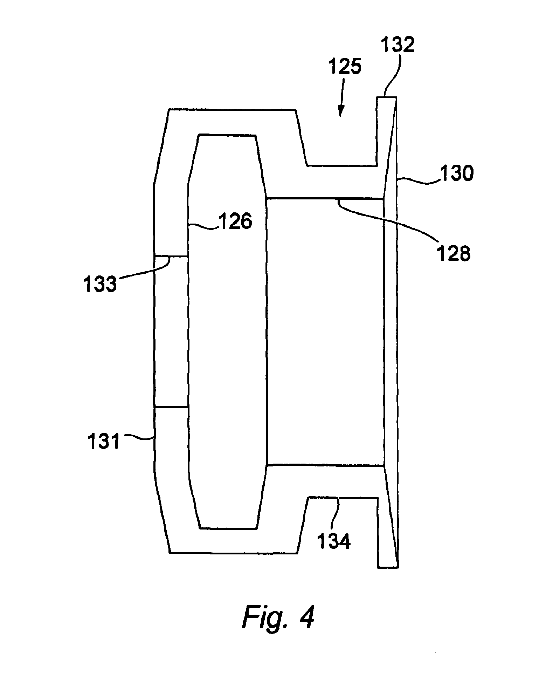

figure 4, which provides a view of one half of an alternative damper for use with a bend restrictor;

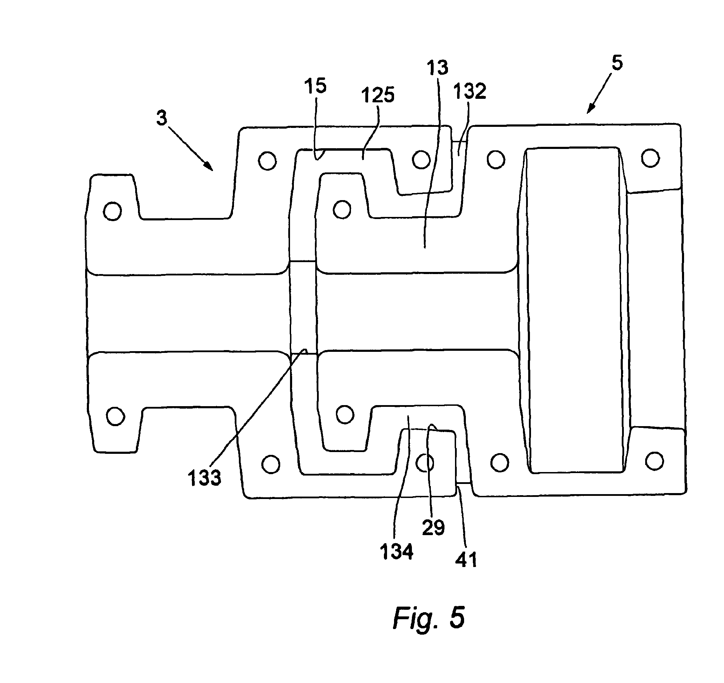

figure 5, which provides a view of two interconnected sections of a third embodiment of a bend restrictor with the alternative damper of figure 4 in place;

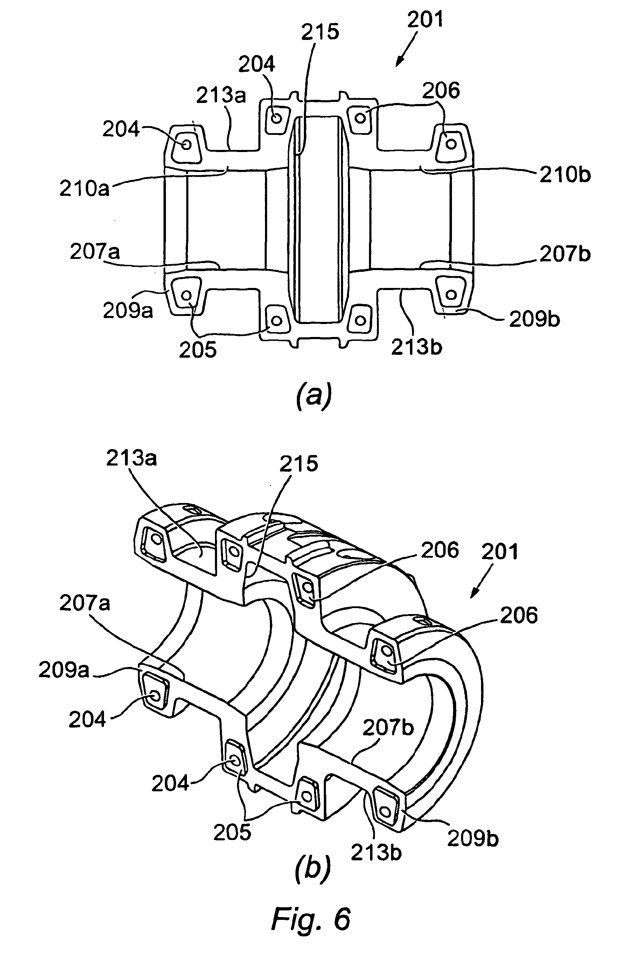

figure 6(a) and 6(b), which provide respective side and perspective views of a first modified half-vertebra for use in a bend restrictor;

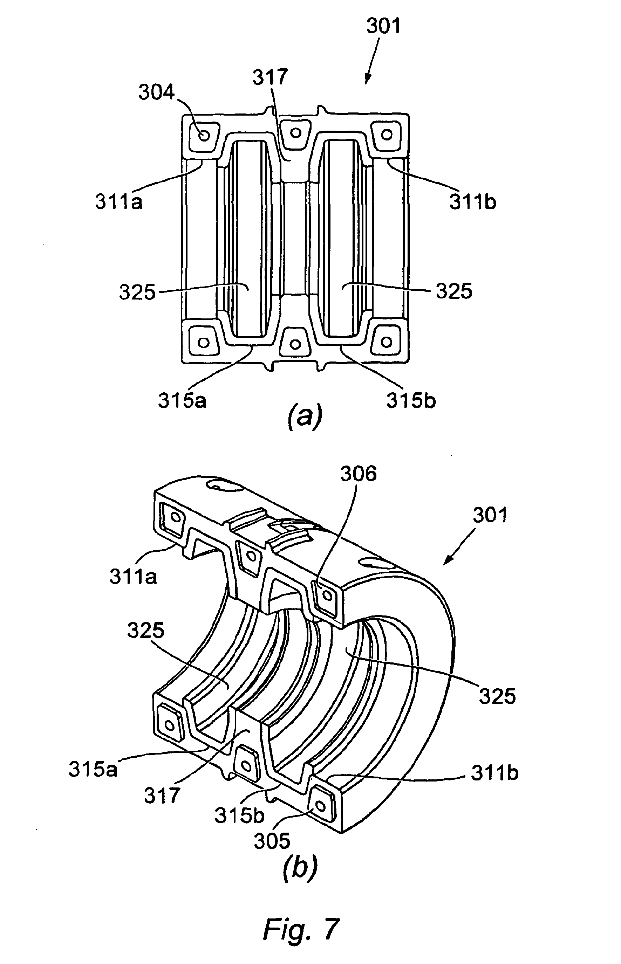

figure 7(a) and 7(b), which provide respective side and perspective views of a second modified half-vertebra for use in a bend restrictor; and

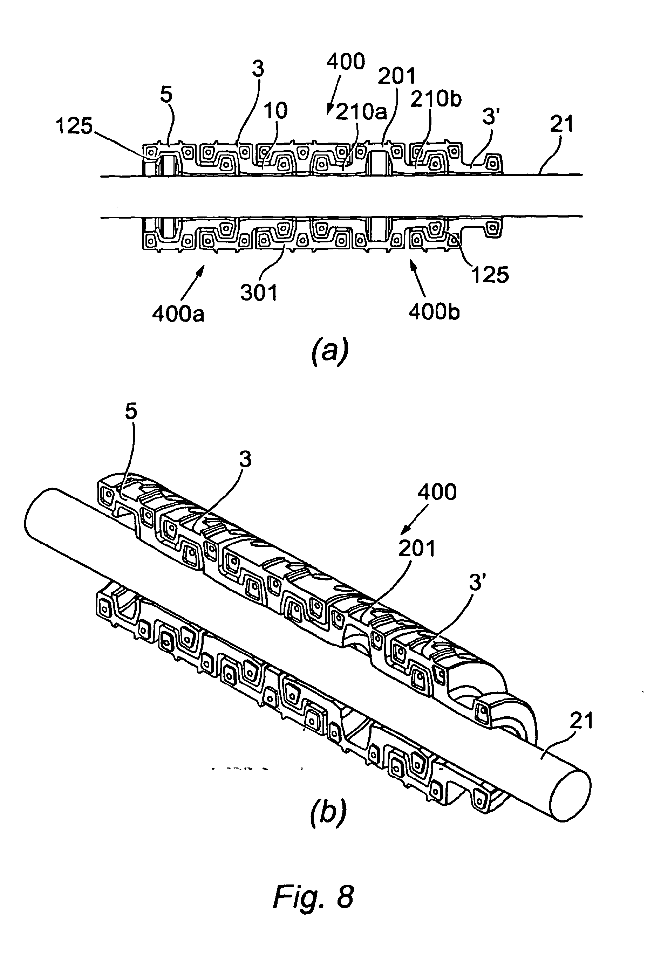

figure 8(a) and 8(b), which provide respective side and perspective views of a part-assembled bend restrictor employing the modified half-vertebrae of figures 6 and 7.

### Detailed Description of the Drawings:

A bend restrictor is a device that is operable to prevent a utility line such as a flowline, umbilical and/or cable, from bending below its minimum bend radius.

A minimum bend radius is the minimum radius one can bend a utility line without kinking it, damaging it, or shortening its life span.

Each of the vertebrae described herein is formed from two half-vertebrae which are attached together to form a single vertebra. For illustrative purposes only one half of each complete vertebra is shown in each figure.

Figure 1 provides a perspective view of two interconnected sections, or body members, of a bend restrictor 1. The two interconnected sections are in the form of first and second half-vertebrae 3,5. Both half-vertebrae 3,5 are structurally identical. Each half-vertebra 3,5 has a plurality of attachment apertures 4 defined therein. These apertures 4 are suitably dimensioned to receive projections (not shown) provided on a second half-vertebra (not shown) or mechanical fixtures so that respective half-vertebrae may be connected to form a complete vertebra. A complete vertebra forms a section of the bend restrictor 1. Each half-vertebra has a longitudinally-extending cavity 7. When two half-vertebrae are connected together to form a vertebra, the cavities 7 of each of the half-vertebrae combine to form a bore suitable for housing a utility line.

Each half-vertebra 3,5 comprises a male projecting portion 10 and a female portion 11, each being located on opposing ends of the half-vertebra 3,5. The male portion 10 comprises an elongate neck portion 13, which has a semi-annular flange 9 formed at the end of the neck portion 13 remote from the female portion 11. The female portion 11 has a reduced diameter section with an inner surface 29. The inner surface 29 of the female portion 11 tapers radially inwardly in the direction of the male portion 10. A semi-annular recess 15 is defined between the reduced diameter section of the female portion 11 and the neck portion 13.

As shown in figure 1, when the two half-vertebrae 3,5 are connected, the male portion 10 of the second half-vertebra 5 is received into the female portion 11 of the first half-vertebra 3. The semi-annular flange 9 of the second half-vertebra 5 lies within the corresponding recess 15 of the first half-vertebra 3.

The tapering of the inner surface 29 of the female portion 11 ensures a radial gap 12 is present between the inner surface 29 of female portion 11 of the first half-vertebra 3 and the outer surface of the neck portion 13 of the second half-vertebra 5, when both half-vertebrae 3,5 are interconnected. The gap 12 widens in the axial direction of the half-vertebrae 3,5 which will enable each half-vertebra 3,5 to pivot and move a limited angular distance relative to the other. Once the inner surface 29 of female portion 11 of half-vertebra 3 contacts the outer surface of neck portion 13 of the male portion 10 of half vertebra 5, or vice versa, further relative movement between the half-vertebrae 3,5 is prevented. At the same time a first abutment face 26 on flange 9 of half-vertebrae 5 makes contact with a second abutment surface 28 defined between the reduced diameter section and recess 15 of half-vertebrae 3. The "lock-out point" is the point at which these respective faces 26,28 contact one another.

The width of the recess 15 of each half-vertebra 3,5 is greater than the width of the cavity 7 in the neck portion 13 of each half-vertebra 3,5. This step change in width creates a first damping surface 23 between the recess 15 and the cavity 7. The first damping surface 23 faces towards the female portion 11 of half-vertebra 3. The flange 9 of the half-vertebra 5 has an end face which defines a second damping surface 24. When the half-vertebrae 3,5 are connected as shown in figure 1 the second damping surface 24 faces the first damping surface 23. A resilient damping member, in the form of an elastomeric ring member 25, is positioned between the first damping surface 23 and the second damping surface 24. In this position the elastomeric ring member 25 is located internally of the half-vertebrae 3,5.

The elastomeric ring member 25 will dampen any relative movement between the interconnected vertebrae sections. The elastomeric ring member 25 will ensure that the bend restrictor 30 provides a degree of damping to the relative movement between the vertebrae sections up to the "lock-out point" of the bend restrictor 30. Consequently, the bend restrictor 30 will reduce the likelihood of fatigue stresses occurring in a utility line housed within the bend restrictor 30.

In an identical manner to that shown in figure 1, a plurality of sections or body members can be connected together in series to form a bend restrictor with a housing suitable for housing longer utility lines. The respective halves of the plurality of interconnected sections which form a known bend restrictor 20 suitable for housing longer utility lines is illustrated in figure 2.

As shown in figure 2, a plurality of half-vertebrae 3,5 are connected in series. The cavities 7 of each half-vertebra 3,5 together form a bore suitable for housing longer utility lines. Each of the half-vertebrae 3,5 is structurally identical to those shown in figure 1. Therefore each half-vertebra 3 in the series can pivot and move a limited angular distance relative to the adjacent half-vertebra 5 it is connected to. When expanded over the entire bend restrictor length, the limited angular distance that each half-vertebra 3,5 can move combine to define the locking radius 'R' of the bend restrictor 20.

The bend restrictor 20 of figure 2 is shown to house a utility line 21. The locking radius 'R' matches, or is greater than, the minimum bend radius of the utility line 21 that is housed within the bend restrictor 20. In this way the series of half-vertebrae 3,5 which form the bend restrictor 20 lock to prevent bending of the utility line 21 below its minimum bend radius. In this manner the bend restrictor 20 prevents kinking, buckling or damage of the utility line 21 housed within it.

Figure 3 provides a perspective view of two sections of a bend restrictor 40 according to a second embodiment of the present invention. The respective halves of the two sections are in the form of half-vertebrae 3 and 5 which are identical to those illustrated in figure 1 so like features are awarded the same reference numerals. As described above with respect to figure 1 a second half-vertebra (not shown) would be connected to each of the half-vertebrae 3,5 to form a series of interconnected vertebrae. Each vertebra forms a section of the bend restrictor 40.

The free end of the female portion 11 of half-vertebra 3 comprises an end face 41 which acts as a first damping surface. The outer diameter of the female portion 11 of each half-vertebra 3,5 is larger than the outer diameter of the neck portion 13. A second damping surface 43 is defined at the step change in diameter between the neck portion 13 and the female portion 11 of half-vertebrae 5 on the outer surface of the half-vertebrae 3,5. The second damping surface 43 faces towards the male portion 10. When the two half-vertebrae 3,5 are connected as shown in figure 3, the first and second damping surfaces 41,43 face one another. A resilient damping member, in the form of a semi-annular, generally C-shaped elastomeric member 31, is positioned between the first damping surface 41 and the second damping surface 43. In this embodiment the elastomeric member 31 is located externally of the half-vertebrae 3,5.

The bend restrictor 40 illustrated in figure 3 offers the same advantages as the bend restrictor 30 illustrated in figure 1.

It will be understood that, in a similar manner to that shown in figure 2, any number of the half-vertebrae 3,5 of the second embodiment may be connected in series and an elastomeric member 31 provided, externally, between each of the interconnected half-vertebrae 3,5 in the series, so that a bend restrictor of any desired length can be formed.

The method of assembly of the first or second embodiment of the bend restrictor shown in figures 1 and 3, respectively, is substantially the same. In either case the restrictor is normally assembled on site as the utility line to be protected is being deployed (e.g. on a cable deploying marine vessel). Referring to figures 1 and 3 in particular, a pair of second half-vertebrae 5 are placed either side of the utility line (not shown) and brought into contact with one another so that their respective fixing apertures 4 are aligned. Suitable mechanical fixtures (e.g threaded nuts and bolts) are then located in the apertures 4 in order to fix the two half-vertebrae 5 together in form a complete vertebra. The next step depends upon which type of motion damper is to be used - the damper ring 25 used in the first embodiment or else the C-shaped semi-annular damper 31 used in the second embodiment. Where the ring 25 is being used, it is run along the utility line and then placed inside the recess 15 of one subsequent half-vertebra 3 so that it lies against the first damping surface 23. The half-vertebra 3 is placed on one side of the utility line such that the male portion 10 of the previously-installed vertebra 5 locates in the recess 15 of half-vertebra 3 with the damper ring 15 sandwiched between the second damping surface 23 of the vertebra 5 and the first damping surface 24 of the half-vertebra 3. A corresponding half-vertebra (not shown) is then brought into position in the same manner on the opposite side of the utility line such that the ring 25 lies in the corresponding cavity of that half-vertebra and the fixing apertures 4 are again aligned with one another. The two half-vertebrae 3 are then also mechanically fixed to one another via the apertures 4 in the same manner as with vertebra 5. This process is then repeated along the length of the utility line.

The only modification to this procedure when using the C-shaped dampers 31 is that these are placed onto the neck portion 13 of the previously installed vertebra 5 before the next vertebra 3 is installed. The C-shaped dampers 31 are placed on the neck portion 13 so that they lie against the second damping surface 43, and once the subsequent half-vertebra 3 has been positioned over the male portion 10 of the vertebra 5 the dampers 31 are held between the first damping surface 41 of the half-vertebrae 3 and the second damping surface 43 of the half-vertebrae 5. The half-vertebrae 3 are then fixed together as previously described.

Figure 4 shows one half of an alternative damping member which may be used in the bend restrictor of the present invention. The alternative damper 125 is preferably formed from the same elastomeric material as the ring members described above. The damper 125 is a generally cylindrical sleeve formed from a pair of semi-cylindrical sections. The sections may be entirely separate from one another, or else they may be attached to one another along at least one edge such that a split is present in the sleeve which will allow it to expand to receive part of a vertebra therein. Figure 4 shows one of the separate sections of the sleeve 125.

Between them the sections of the sleeve 125 define a generally circular chamber 126 which is connected by an internal passage 128 to a first end 130 of the sleeve 125. The first end 130 of the sleeve 125 is open and surrounded by a flange 132 which projects radially outward from the sleeve 125. The chamber 126 is also open to a second end 131 of the sleeve 125 via an aperture 133, which is defined between the two sections of the sleeve 125. The chamber 126 has a larger diameter than the passage 128 and the sleeve 125 has a larger outer diameter in the region outward of the chamber 126 than in the region outward of the passage 128. Consequently, a neck portion 134 of reduced diameter is defined between the chamber 126 and flange 132.

Figure 5 shows the half section of the sleeve 125 in position between a pair of half-vertebrae 3,5 to form a bend restrictor in accordance with a third embodiment of the present invention. The half-vertebrae 3,5 are identical to those described above and so the same reference numbers will be used here when describing the vertebrae as were used above. The sleeve 125 is shaped so as to substantially fill the gaps defined between the neck portion 13 of half-vertebra 5 and the recess 15 of half-vertebra 3.

The method of assembling this third embodiment of bend restrictor is similar to those described above with respect to the first and second embodiments. However, prior to locating the pair of the first half-vertebrae 3 over the neck portion of the already-assembled vertebra 5 the sections of the sleeve 125 are placed in the respective recesses 15 of the two first half-vertebrae 3. With the sleeve located correctly in the half-vertebrae 3 its flange 132 lies against the first damping surface 41, its neck portion 134 lies against the inner surface 29, and its chamber region lies in the recess 15. If the sections of the sleeve 125 are attached to one another, then the sleeve is simply placed in one of the half-vertebrae 3 so that the respective sections abut one another in the same manner.

Once the sleeve 125 is in position, the first half-vertebrae 3 can be placed over the second vertebra 5 as described above. If the sections of the sleeve 125 are attached to one another, the split therein allows the sleeve 125 to expand to receive the neck portion 13 of the vertebra 5. As seen in figure 5, with the half-vertebra 3 properly located on half-vertebra 5 its radial flange 9 locates within the chamber 126 and its neck portion 13 lies in the passage 128. In addition, the flange 132 of the sleeve 125 is now sandwiched between the first and second damping surfaces 41,43 of the half-vertebrae 3,5. The aperture 133 allows an umbilical cable or the like to pass through the sleeve 125.

The elastomeric sleeve 125 will dampen any relative movement between the interconnected half-vertebrae 3,5 and ensure that the bend restrictor 30 provides a degree of resistance to relative movement between the half-vertebrae 3,5 in the same manner as the ring members. Providing a motion damper in the form of a sleeve that fills the entire gap between adjacent vertebrae further stiffens the bend restrictor and at the same time minimises the possibility of contaminants entering the gaps between vertebrae.

Figures 6(a) and 6(b) show views of a modified half-vertebra 201 for use in a bend restrictor. As with the other half-vertebrae described herein, a pair of half-vertebrae 201 will be assembled together so as to provide a protective member which encloses and protects a utility line or the like. Half-vertebra 201 has a plurality of attachment apertures 204 defined therein which may receive projections (not shown) provided on the other half-vertebra (not shown) and/or mechanical fixtures of the type already described to fix the two half-vertebrae together. As seen best in figure 6(b), the attachment apertures 204 along one side of the half-vertebra 201 may be supplemented by locating blocks 205 and those along the opposite side by corresponding locating niches 206 which help with the alignment of the apertures 204 of the corresponding half-vertebrae.

This modified half-vertebra 201 comprises a pair of male portions 210a,210b which project longitudinally in opposite directions from respective ends of the half-vertebra 201. As with the previous embodiments each male portion 210a,210b comprises an elongate neck portion 213a,213b which has a semi-annular flange 209a,209b formed at the respective ends of the neck portions 213a,213b. Located centrally between the two neck portions 213a,213b is a semi-annular recess 215. Each neck portion 213a,213b also has a longitudinally-extending cavity 207a,207b which extends from the recess 215 to the free ends of the respective male portions 210a,210b.

Another protective member formed from modified half-vertebrae 301 is shown in figures 7(a) and 7(b). This modified half-vertebra 301 has a generally C-shaped profile and comprises a pair of female portions 311a,311b which face in opposite directions to one another. Each female portion 311 a,311 b has a semi-annular recess 315a,315b, with the recesses 315a,315b being separated from one another by a semi-annular abutment 317. Motion damper sleeves 325 are located in each of the recesses 315a,315b but it should be understood that these sleeves are not essential in this modified embodiment of a bend restrictor. Attachment apertures 304 are provided for assembling respective half-vertebrae 301 together. These apertures may be supplemented with locating blocks 305 and niches 306 in the same manner as the modified half-vertebra of figure 6.

Figures 8(a) and 8(b) show a bend restrictor 400 which employs both the first and second half-vertebrae 3,5 described above as well as protective members formed from the modified half-vertebrae 201,301 of figures 6 and 7. For clarity, the opposing half of each half-vertebra has been removed.

In this embodiment of bend restrictor 400, lengths of vertebrae are assembled together off site and then threaded onto a utility line or the like (not shown) on site. In figure 8, first and second pre-assembled lengths 400a,400b are represented by half-vertebrae 3,5 on the left hand side and by half-vertebrae 201 and 3' on the right hand side, respectively. The first length 400a of half-vertebrae 3,5 are assembled to form a series of interconnected vertebrae in the same manner as described with respect to the first and second embodiments above, except that they are not immediately assembled about a utility line. In this embodiment, the half-vertebrae 3,5 include motion damper sleeves 125 but it is not essential that such sleeves are present in this embodiment.

In the second pre-assembled length 400b the half-vertebra 3' is fitted onto the second male portion 210b of the half-vertebra 201 in substantially the same manner as described above, with or without motion damper sleeve 125, thereby leaving the first male portion 210a free. It can thus be seen that the purpose of a vertebra formed from half-vertebrae 201 is to ensure that the there is a projecting male portion on either end of a pre-assembled length of bend restrictor.

Once the lengths of bend restrictor have been assembled off site they can be transported to the site of the installation ready for final assembly. Once at the site, the pre-assembled lengths 400a,400b are threaded onto a utility line 21 such that the line 21 lies in a longitudinal bore formed from the cavities 7,207 of the respective half-vertebrae. The respective male projecting portions 10, 210a of vertebrae 3,201 are thus exposed and lying adjacent one another on the utility line. The modified half-vertebrae 301 are then introduced in order to connect the exposed male portions 10,210a. One half-vertebrae 301 is placed either side of the utility line such that the male portions 10,210a lie in the corresponding recesses 315a,315b in the half-vertebrae 301. The half-vertebrae are then fixed to one another in the same manner as the other half-vertebrae, thereby fixedly connecting the two lengths 400a,400b of bend restrictor 400 together about the utility line.

For avoidance of doubt, whilst the modified vertebrae 201,301 have pairs of male or female portions, those male and female portions are substantially identical to those of the earlier described embodiments. Thus, the modified vertebrae still pivot and limit the angular movement of adjacent vertebrae in the same manner as described in detail above. Similarly, where motion dampers are provided in the modified vertebrae they will have the same beneficial effects.

Although the figures show bend restrictors comprising sections and protective members that are formed of two half-vertebrae, it will be understood that the sections and protective members may take any other suitable form. For example, they may be formed as a single piece with a utility line bore defined therein. Additionally, it will be understood that the bend restrictors are not limited to having two sections, and any number of sections may be connected in series to form a bend restrictor of any desired length. A damping member may be located between each section.

The present invention is not limited to use of the specific damping members described with respect to each preferred embodiment. The damping members of each embodiment may be interchangeable. For example, the damping member rings of the first embodiment may be replaced with semi-annular damping members of the type used in the second preferred embodiment.

The bend restrictor may have any suitable length. Preferably, the bend restrictor will be between 0.5m and 30m in length.

The bend restrictor may have a minimum bend radius of any length. Preferably, the bend restrictor has a minimum bend radius of between 30m and 0.5m.

The bore defined by the sections when connected may have any suitable dimensions. Preferably, the bore defined by the sections when connected has a diameter of between 50mm and 600mm.

It will be understood that more than one motion damper may be provided at the junction between interconnected sections.

The skilled person will also recognise that motion dampers may be provided internally (as in the first embodiment) and externally (as in the second embodiment) in the same bend restrictor.

The or each motion damping means may have any suitable hardness. Preferably, the or each motion damping means has a hardness of between Shore 10A and Shore 85A.

The or each motion damping means may have any suitable thickness. Preferably, the or each motion damping means has a thickness of between 3% and 110% of the gap that exists between interconnected sections when the sections are co-axial.

The or each ring member may have any suitable diameter. Preferably, the or each ring member has a diameter of between 5% and 200% of the maximum external diameter of the sections.

Whilst the preferred interconnection between each pair of body members or sections is by way of a projecting male portion extending into a corresponding female recess in an adjacent body member, the invention is not limited to this arrangement. For example, the interconnecting could alternatively be provided by way of a ball and socket arrangement, with the ball of one member being received in a corresponding socket in the adjacent member.

## Claims

1. A protective housing for a utility line, the housing comprising:
at least two longitudinally arranged body members (3,5) pivotably connected to one another and each being adapted to receive a portion of the utility line (21); and
a resilient damping member (125) located between the two body members (3,5);
wherein each body member (3,5) has a first end having a longitudinally projecting portion (10), a second end having a recess (15), and wherein the projecting portion (10) of a first body member (5) is received in the recess (15) of an adjacent second body member (3),
**characterised in that** each body member (3,5) has an outer surface which includes a damping surface (43), and the damping member (125) is located in the recess (15) between the first and second body members (5,3) and between the damping surface (43) of the first body member (5) and the second end of the second body member (3).

2. The housing of claim 1, wherein the damping member (125) is a sleeve located between the first and second body members (5,3).

3. The housing of claim 2, wherein the sleeve comprises:
a first end (130) having a flange (132) which projects radially outwardly and lies between the damping surface (41) of the first body member (5) and the second end of the second body member (3); and
a second end (131) which receives the projecting portion (10) of the first body member (5).

4. The housing of claim 3, wherein the second end (131) of the sleeve includes an aperture (133) for receiving the utility line.

5. The housing of any preceding claim, wherein each body member (3,5) is formed from two longitudinal sections which are attached to one another so as to surround the utility line.

6. The housing of claim 5, wherein each section has two sets of attachment apertures (204,304) adapted to receive mechanical fixtures, and wherein each of a first set of the apertures (204,304) includes a locating block (205,305) and each of a second set of the apertures (204,304) includes a locating recess (206,306) adapted to receive a corresponding locating block (205,305).

7. The housing of any preceding claim, further comprising a plurality of longitudinally arranged body members (3,5), and a damping member (124) located between each body member (3,5).

8. A method of assembling a protective housing for a utility line, comprising:
forming a first body member (5) having a first end with a longitudinally projecting portion (10), a second end having a recess (15), and a bore (7) for housing the utility line (21);
placing a resilient damping member (125) over the first end of the first body member (5); and
forming a second body member (3) having a first end with a longitudinally projecting portion (10), a second end having a recess (15), and a bore (7) for housing the utility line;
**characterised in that** the damping member (125) comprises a sleeve having a chamber (126) which receives the first end of the first body member (5), and a flange (132) which projects radially outwardly from the sleeve, and the method further comprises the step of:
locating the second body member (3) such that the first end of the first body member (5) is received in the second end of the second body member (3), wherein the damping member (125) is located in the recess (15) of the second body member (3) between the first and second body members (5,3) and the projecting flange (132) lies between the first body member (5) and the second end of the second body member (3).

## Patentansprüche

1. Ein Schutzgehäuse für eine Versorgungsleitung, wobei das Gehäuse Folgendes beinhaltet:
mindestens zwei in Längsrichtung angeordnete Körperelemente (3, 5), die schwenkbar miteinander verbunden und jeweils angepasst sind, um einen Abschnitt der Versorgungsleitung (21) aufzunehmen; und
ein elastisches Dämpfungselement (125), das sich zwischen den zwei Körperelementen (3, 5) befindet;
wobei jedes Körperelement (3, 5) ein erstes Ende mit einem in Längsrichtung vorspringenden Abschnitt (10), ein zweites Ende mit einer Aussparung (15) aufweist, und wobei der vorspringende Abschnitt (10) eines ersten Körperelements (5) in der Aussparung (15) eines benachbarten zweiten Körperelements (3) aufgenommen ist,
**dadurch gekennzeichnet, dass** jedes Körperelement (3, 5) eine Außenfläche aufweist, die eine Dämpfungsfläche (43) umfasst, und das Dämpfungselement (125) sich in der Aussparung (15) zwischen dem ersten und dem zweiten Körperelement (5, 3) und zwischen der Dämpfungsfläche (43) des ersten Körperelements (5) und dem zweiten Ende des zweiten Körperelements (3) befindet.

2. Gehäuse gemäß Anspruch 1, wobei das Dämpfungselement (125) eine Hülse ist, die sich zwischen dem ersten und dem zweiten Körperelement (5, 3) befindet.

3. Gehäuse gemäß Anspruch 2, wobei die Hülse Folgendes beinhaltet:
ein erstes Ende (130) mit einem Flansch (132), der radial nach außen vorspringt und zwischen der Dämpfungsfläche (41) des ersten Körperelements (5) und dem zweiten Ende des zweiten Körperelements (3) liegt; und
ein zweites Ende (131), das den vorspringenden Abschnitt (10) des ersten Körperelements (5) aufnimmt.

4. Gehäuse gemäß Anspruch 3, wobei das zweite Ende (131) der Hülse eine Öffnung (133) zur Aufnahme der Versorgungsleitung umfasst.

5. Gehäuse gemäß einem vorhergehenden Anspruch, wobei jedes Körperelement (3, 5) aus zwei Längsteilabschnitten gebildet ist, die aneinander befestigt sind, um die Versorgungsleitung zu umgeben.

6. Gehäuse gemäß Anspruch 5, wobei jeder Teilabschnitt zwei Sätze Befestigungsöffnungen (204, 304) aufweist, die angepasst sind, um mechanische Haltevorrichtungen aufzunehmen, und wobei jede eines ersten Satzes der Öffnungen (204, 304) einen Positionierungsblock (205, 305) umfasst und jede eines zweiten Satzes der Öffnungen (204, 304) eine Positionierungsaussparung (206, 306) umfasst, die angepasst ist, um einen entsprechenden Positionierungsblock (205, 305) aufzunehmen.

7. Gehäuse gemäß einem vorhergehenden Anspruch, ferner beinhaltend eine Vielzahl von in Längsrichtung angeordneten Körperelementen (3, 5) und ein Dämpfungselement (124), das sich zwischen jedem Körperelement (3, 5) befindet.

8. Ein Verfahren zur Montage eines Schutzgehäuses für eine Versorgungsleitung, beinhaltend:
Bilden eines ersten Körperelements (5), das ein erstes Ende mit einem in Längsrichtung vorspringenden Abschnitt (10), ein zweites Ende mit einer Aussparung (15) und eine Bohrung (7) zur Unterbringung der Versorgungsleitung (21) aufweist;
Platzieren eines elastischen Dämpfungselements (125) über dem ersten Ende des ersten Körperelements (5); und
Bilden eines zweiten Körperelements (3), das ein erstes Ende mit einem in Längsrichtung vorspringenden Abschnitt (10), ein zweites Ende mit einer Aussparung (15), und eine Bohrung (7) zur Unterbringung der Versorgungsleitung aufweist;
**dadurch gekennzeichnet, dass** das Dämpfungselement (125) eine Hülse mit einer Kammer (126), die das erste Ende des ersten Körperelements (5) aufnimmt, und einen Flansch (132), der radial nach außen von der Hülse vorspringt, beinhaltet, und wobei das Verfahren ferner den folgenden Schritt beinhaltet:
Positionieren des zweiten Körperelements (3), so dass das erste Ende des ersten Körperelements (5) in dem zweiten Ende des zweiten Körperelements (3) aufgenommen wird, wobei sich das Dämpfungselement (125) in der Aussparung (15) des zweiten Körperelements (3) zwischen dem ersten und dem zweiten Körperelement (5, 3) befindet und der vorspringende Flansch (132) zwischen dem ersten Körperelement (5) und dem zweiten Ende des zweiten Körperelements (3) liegt.

## Revendications

1. Un logement protecteur pour une canalisation, le logement comprenant :
au moins deux éléments de corps agencés de façon longitudinale (3, 5) raccordés l'un à l'autre de façon à pouvoir pivoter et étant chacun adaptés pour recevoir une portion de la canalisation (21) ; et
un élément d'amortissement résilient (125) positionné entre les deux éléments de corps (3, 5) ;
dans lequel chaque élément de corps (3, 5) possède une première extrémité ayant une portion faisant saillie de façon longitudinale (10), une deuxième extrémité ayant un renfoncement (15), et dans lequel la portion faisant saillie (10) d'un premier élément de corps (5) est reçue dans le renfoncement (15) d'un deuxième élément de corps adjacent (3),
**caractérisé en ce que** chaque élément de corps (3, 5) a une surface externe qui comporte une surface d'amortissement (43), et l'élément d'amortissement (125) est positionné dans le renfoncement (15) entre le premier et le deuxième élément de corps (5, 3) et entre la surface d'amortissement (43) du premier élément de corps (5) et la deuxième extrémité du deuxième élément de corps (3).

2. Le logement de la revendication 1, dans lequel l'élément d'amortissement (125) est un manchon positionné entre le premier et le deuxième élément de corps (5, 3).

3. Le logement de la revendication 2, dans lequel le manchon comprend :
une première extrémité (130) ayant un flasque (132) qui fait saillie radialement vers l'extérieur et repose entre la surface d'amortissement (41) du premier élément de corps (5) et la deuxième extrémité du deuxième élément de corps (3) ; et
une deuxième extrémité (131) qui reçoit la portion faisant saillie (10) du premier élément de corps (5).

4. Le logement de la revendication 3, dans lequel la deuxième extrémité (131) du manchon comporte un orifice (133) destiné à recevoir la canalisation.

5. Le logement de n'importe quelle revendication précédente, dans lequel chaque élément de corps (3, 5) est formé à partir de deux sections longitudinales qui sont attachées l'une à l'autre de manière à entourer la canalisation.

6. Le logement de la revendication 5, dans lequel chaque section a deux orifices d'attache (204, 304) adaptés pour recevoir des organes de fixation mécaniques, et dans lequel chaque orifice d'un premier jeu d'orifices (204, 304) comporte un bloc de positionnement (205, 305) et chaque orifice d'un deuxième jeu d'orifices (204, 304) comporte un renfoncement de positionnement (206, 306) adapté pour recevoir un bloc de positionnement correspondant (205, 305).

7. Le logement de n'importe quelle revendication précédente, comprenant en sus une pluralité d'éléments de corps agencés de façon longitudinale (3, 5), et un élément d'amortissement (124) positionné entre chaque élément de corps (3, 5).

8. Une méthode d'assemblage d'un logement protecteur pour une canalisation, comprenant :
la formation d'un premier élément de corps (5) possédant une première extrémité avec une portion faisant saillie de façon longitudinale (10), une deuxième extrémité ayant un renfoncement (15), et un alésage (7) destiné à accueillir la canalisation (21) ;
la mise en place d'un élément d'amortissement résilient (125) par-dessus la première extrémité du premier élément de corps (5) ; et
la formation d'un deuxième élément de corps (3) ayant une première extrémité avec une portion faisant saillie de façon longitudinale (10), une deuxième extrémité ayant un renfoncement (15), et un alésage (7) destiné à accueillir la canalisation ;
**caractérisée en ce que** l'élément d'amortissement (125) comprend un manchon possédant une chambre (126) qui reçoit la première extrémité du premier élément de corps (5), et un flasque (132) qui fait saillie radialement vers l'extérieur à partir du manchon, et la méthode comprend en sus l'étape consistant à :
positionner le deuxième élément de corps (3) de telle sorte que la première extrémité du premier élément de corps (5) soit reçue dans la deuxième extrémité du deuxième élément de corps (3), dans laquelle l'élément d'amortissement (125) est positionné dans le renfoncement (15) du deuxième élément de corps (3) entre le premier et le deuxième élément de corps (5, 3) et le flasque faisant saillie (132) repose entre le premier élément de corps (5) et la deuxième extrémité du deuxième élément de corps (3).
